Europäisches Patentamt

European Patent Office

Office européen des brevets

(11) Publication number: **0 053 944**
A1

(19)

(12) # EUROPEAN PATENT APPLICATION

(21) Application number: 81305808.8

(22) Date of filing: 09.12.81

(51) Int. Cl.³: **G 11 B 5/02**
G 11 B 5/12, G 11 B 5/20
G 11 B 5/70

(30) Priority: 09.12.80 JP 174023/80

(43) Date of publication of application:
16.06.82 Bulletin 82/24

(84) Designated Contracting States:
DE FR GB

(71) Applicant: Matsushita Electric Industrial Co., Ltd.
1006, Oaza Kadoma
Kadoma-shi Osaka-fu, 571(JP)

(72) Inventor: Hirota, Hozumi
90-9, Yatayama-cho
Yamatokoriyama-shi Nara-ken(JP)

(72) Inventor: Iwahara, Katsutoshi
5-4-502, Fujisakanishi-machi
Hirakata-shi Osaka-fu(JP)

(72) Inventor: Sato, Tomi
21-13, Naritahigashi-machi
Neyagawa-shi Osaka-fu(JP)

(74) Representative: Crawford, Andrew Birkby et al,
A.A. THORNTON & CO. Northumberland House 303-306
High Holborn
London WC1V 7LE(GB)

(54) A perpendicular magnetic recording and reproducing head apparatus and a magnetic recording system using the same.

(57) A magnetic recording and/or reproducing head comprises a ring-shaped core (41) provided with a gap (43). A pair of coils (421, 422) are wound on the core and connection means (44) are connected to the coils (421, 422) for changing the mode of connection of the coils from between a first condition in which homopolar poles are formed across the gap (43) for recording and a second condition in which heteropoles are formed across the gap (43) for reproduction. The first condition can be achieved with the coils either inversely in parallel or inversely in series. The construction permits recording in a perpendicular direction in a recording medium (11) which can either be a conventional medium or a continuous film of Co-Cr which is perpendicularly anisotropic.

FIG.4.

RECORDING SIGNAL

EP 0 053 944 A1

- 1 -

# A PERPENDICULAR MAGNETIC RECORDING AND REPRODUCING HEAD APPARATUS AND A MAGNETIC RECORDING SYSTEM USING THE SAME

This invention relates to a perpendicular magnetic recording and reproducing head apparatus suitable for recording and reproducing onto a perpendicular magnetic recording medium.

Perpendicular magnetic recording has recently been promoted for practical use in various fields for the purpose of increasing the density of information above the limit of a conventional magnetic recording. Such perpendicular magnetic recording uses a recording medium, e.g., a Co-Cr film, which has its axis of easy magnetization axis in the direction of the thickness of the film, the medium being magnetized by a particular magnetic head to record information. Such a method can solve the problem of demagnetization which is unavoidable for magnetization under the surface of conventional medium film (magnetization lengthwise of a tape when in use), thereby accomplishing a high recording density.

A recording and reproducing head for perpendicular recording has been proposed in which two magnetic pole pieces are spaced apart and one of the pole pieces is provided with a coil for recording or reproducing signals on a recording medium disposed in the gap between the pole pieces.

This construction suffers from a number of disadvantage e.g. the relative positioning of the medium in the gap is critical which means that the head is not suitable for use in a helical scan video tape recorder where the heads are rotated due to the extremely complex head drive mechanism required, nor is it useful for fixed-head recording where tracking is required.

An object of the present invention is to provide a recording and reproducing head for perpendicular recording which can be used from only one side of the recording medium

The present invention provides a perpendicular magneti recording and reproducing head apparatus characterised in that said apparatus is provided with a magnetic core (41) having a gap (43) in the magnetic path in part, at least a pair of coils (421, 422) wound on said magnetic core (41), and a connecting means (44) capable of changing said coils into a connecting condition for generating homopolar magnetic charges in a pair of magnetic poles opposite each other through said gap and into that of generating heteropolar magnetic charges in the same magnetic poles, with respect to a common signal current flowing simultaneously in said coils.

An advantage of the present invention is that in addition to providing a transducer head operating from only one side of the recording medium, the efficiency of reproduction is as high as in convnetional longitudinal recording. This is brought about by the switch from a homopolar mode to a heteropolar mode.

It is not necessary to use special recording material as conventional recording materials have been found to give satisfactory results.

In order that the present invention be more readily understood, embodiments thereof will now be described by way of example with reference to the accompanying drawings, in which:-

Fig. 1 is a perspective view of a previously proposed perpendicular magnetic recording and reproducing head;

Figs. 2 and 3 are perspective views of magnetic cores corresponding to a closed flux loop (CFL) mode and a counter flux flow (CFF) mode for explanation of the principles of the invention;

Figs. 4 and 5 show perpendicular magnetic recording and reproducing head apparatus of the invention and of a recording and reproducing method using the head apparatus corresponding to the CFF mode and the CFL mode;

Fig. 6 is a wave form chart of square wave recorded by use of the recording method of the invention;

Figs 7 and 8 are graphs showing the characteric curves of the recording density, in which the curve A shows the embodiments and that B comparison examples of the invention; and

Fig. 9 shows an embodiment of the recording system of the invention, in which the inversely parallel connection is shown.

Before describing the present invention, it is thought that a discussion of the previous proposal for perpendicular recording would be of assistance.

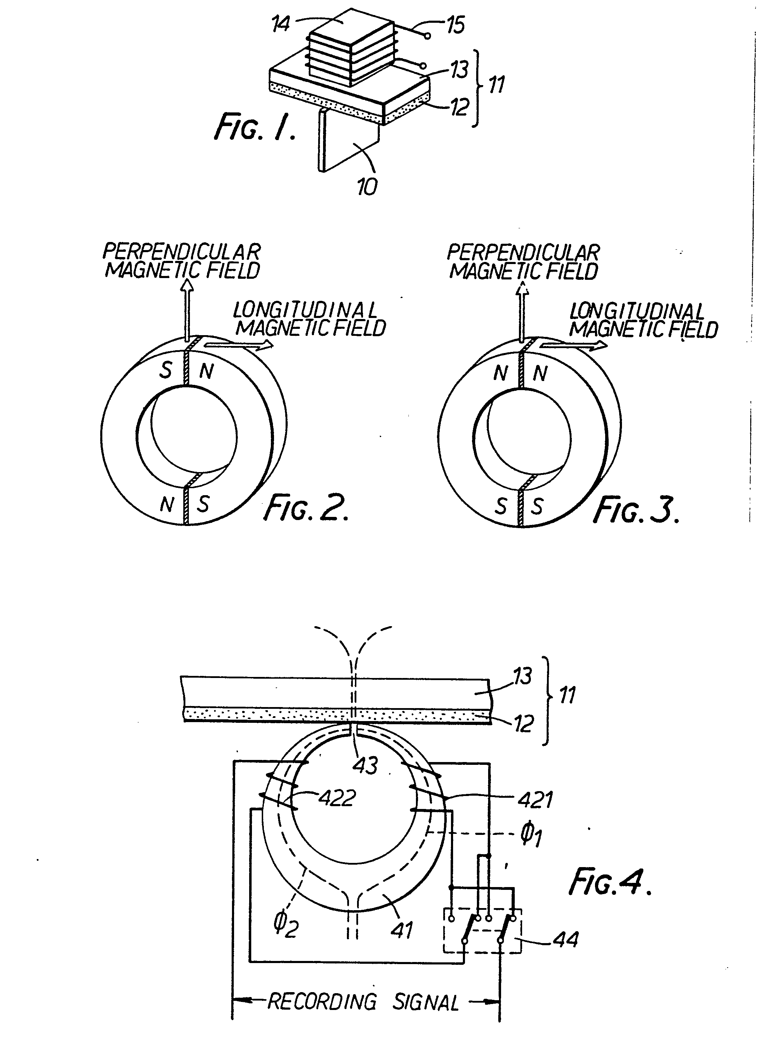

A previously proposed magnetic head used for perpendicular magnetic recording is constructed as shown in Fig. 1, and comprises; a main magnetic pole 10 disposed opposite to a medium 11 comprising a vertically-magnetizing film 12 and a base film 13; and an auxiliary magnetic pole 14 disposed opposite the main pole 10 and a sandwiching the medium 11 between the main pole 10 and the auxiliary pole 14. The main pole 10 comprises a thin strip film of 1 to 3 μm in thickness and of a material exhibiting a high magnetic permeability , the film being held by a non-magnetic material (not shown), such as glass. The auxiliary pole 14 is formed of, for example, ferrite and is thicker than the main magnetic pole. A coil is provided on the auxiliary pole 14 for recording and reproducing signal

The gap between the main pole 10 and the auxiliary pole 14 is usually about 100 $\mu$m, the medium 11 being moved while keeping the surface of vertically-magnetizing film 12 in contact with or in close proximity to main magnetic pole 10. The head records signals on medium 11 in the intense vertical magnetic field of main magnetic pole 10 generated by energizing auxiliary magnetic pole 14 and introduces to auxiliary magnetic pole 14 the magnetic flux of pole 10 generated by the magnetic field from perpendicular magnetizing film 12, thereby reproducing signals. Such a recording and reproducing head assumes that the main magnetic pole 10 operates as a sink for the magnetic flux generated by auxiliary magnetic pole 14 and the thickness of main magnetic pole 10 corresponds to the length of the gap of a ring-shaped magnetic head.

It is reported that after research on the combination of perpendicular head and Co-Cr perpendicular film, the limit of recording density (to be hereinafter called $D_{50}$) determine by the 6 dB lower point at the low density output is 26 kFCPI (flux change per inch).

The maximum defect of the previously proposed perpendicular magnetic recording and reproducing head,as easily supposed from its construction, is low efficiency resulting from the use of an almost open magnetic path. Further, expectable from the dimensions and shape of main magnetic pole it is not expected that a yoke for converging the magnetic flux can be provided.

The main magnetic pole, as abovementioned, should be reduced in thickness in order to get a high density, but the conversion efficiency of the head becomes poor and the reproduction sensitivity deteriorates remarkably by reducing the thickness of main magnetic pole, thereby now adopting the pole of about 1 μm in thickness.

However, in spite of the disadvantages it has been considered that the use of a ring head combined with a Co-Cr perpendicular film is the shortest way to practical use, and researche in this field has been progressively promoted. Typical values resulting from the research have been announched by Fujitsu Ltd., in which $D_{50}$ = 23 kFCPI using a ring head of a gap length of 0.7 μ and by researchers at Tohoku University in which $D_{50}$ = 40 to 45 kFCPI using a gap length of 0.3μ.

When the previously proposed ring head is used as the perpendicular head, the vector of magnetic field generated by the ring head, as well-known, includes a strong longitudinal, i.e. lengthwise component, with respect to the recording medium so that the medium should be provided with properties such that it is easily magnetizable only vertically in order to carry out the perpendicular recording. In other words, the medium should comprise a perpendicular film.

The perpendicular film, however, can only be made at present in the form of continuous film which is generally deemed difficult to use in slidable contact with the head. It is impossible in fact to use the continuous film in contact with the head when wishing to use perpendicular recording is floppy disc applications which actually becomes a large factor of a hindrance to practical use of the perpendicular magnetic recording.

Turning now to the present invnetion, attention is directed to Figs. 2 and 3 which are used to explain the principle of the invention.

Example A (Fig. 2) Two C-shaped permanent magnets of about 0.8 $cm^2$ in cross-sectional area and of about 4 cm in average length of magnetic path were prepared, heteropolar poles were disposed opposite each other through spacers of about 100 um as shown in Fig. 2, and leakage flux in the vicinity of gaps was measured vertically and horizontally by use of a gauss meter. The results were 300 gauss and 100 gauss.

Example B (Fig. 3) The same magnets as in the example (A) were disposed with homopolar poles opposite each other through spacers and the same measurement was carried out to obtain 40 gauss horizontal and 1 KGauss vertical.

From the above two examples, it is understandable that; the leakage flux in the vicinity of gap with respect to the same magnetomotive force is larger in Example (B), in other words, in a condition of generating homopolar magnetic charges (to be hereinafter called Counter Flux Flow: CFF mode); the magnetic flux near the gap in CFF mode is mostly vertical; and in Example (A), in other words, a condition of generating hereopolar magnetic charges (to be hereinafter called Closed Flux Loop: CFL mode) at a pair of magnetic poles opposite to each other through the gaps, there are more horizontal magnetic fields corresponding to the usual ring-type magnetic head for lengthwise magnetization in longitudinal recording.

The above two examples use permanent magnets for convenience of description but actually, the ring-type magnetic head uses no permanent magetic material, but a magnetically soft material, e.g. a permalloy or ferrite in the maganese zinc family. The magnetic field for magnetizing the medium is generated as the leakage flux at the gap portion by causing a signal current to flow in the coil wound on the magnetic core.

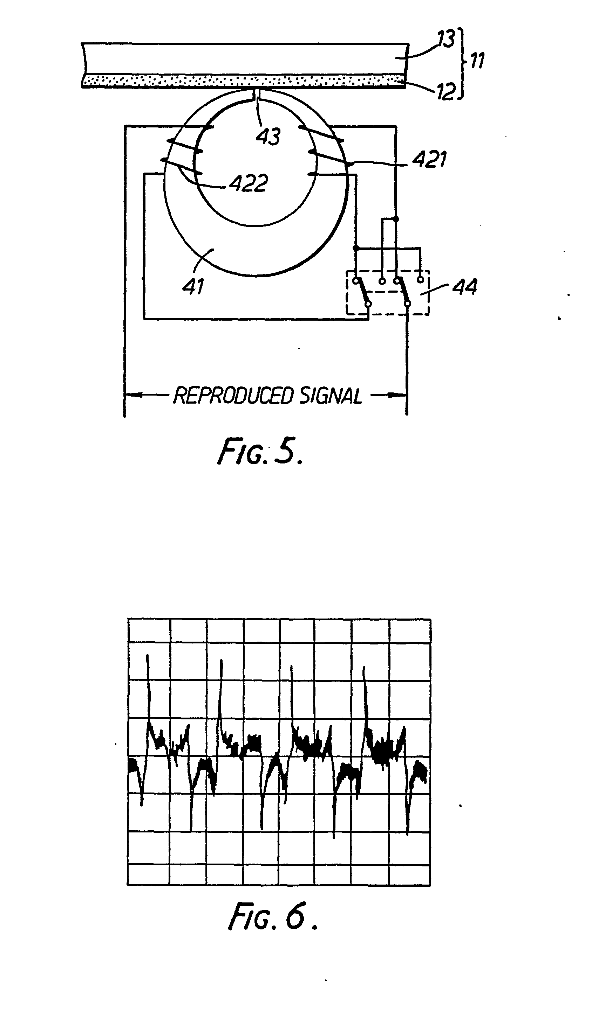

Figs. 4 and 5 show on embodiment of a practical example of a vertical magnetic recording and reproducing head apparatus according to the above principle and components having the same function as in Fig. 1 are designated by the same reference numerals.

Fig. 4 shows a recording condition of the perpendicular magnetic recording and reproducing head apparatus in which a pair of magnetic poles opposite to each other through a gap generate homopolar magnetic charges in response to a signal current to thereby obtain the effective perpendicular magnetic field. For this purpose, a pair of coils 421, 422 are connected inversely in parallel to or inversely in series with each other by a switch 44 (Fig. 4 shows the inverse series connection). Thus, a CFF mode is formed so that coils 421, 422 generate magnetomotive forces and magnetic flux $\phi 1$, $\phi 2$ circulate within magnetic core 41, the flux $\phi 1$ and $\phi 2$ flowing inversely to each other so as to repel each other at the position of gap 43, thereby generating an effectively perpendicular magnetic field to magnetize perpendicular-magnetizing film 12.

Fig. 5 shows a reproducing condition of the perpendicular magnetic recording and reproducing head apparatus of the invention, in which the coils 421 and 422 are connected normally in series to constitute the CFL mode. It is well-known from many research reports that the signal recorded on perpendicular-magnetizing film 12 is reproduced effectively by the conventional ring-type magnetic head in CFL mode.

The ring-type magnetic head, as abovementioned, changes the connection of its windings by use of well-known switching means, such as an electromagnetic contactor, to thereby meet the purpose, thus making it possible to record signals on the perpendicular-magnetizing film in a high efficiency and reproduce them from the same.

As seen from the above. the present invention relates to the magnetic recording system which generates homopolar magnetic charges at a pair of magnetic poles opposite to each other through the gap, so that the signal magnetic field having a principal effect in its perpendicular component is generated at the gap, thereby magnetizing the medium.

This invention does not need a complex head drive mechanism since the head is used at only one side of the medium. The recording system of the invention can obtain a sufficient effect in the recording density without requiring perpendicular easy magnetization for the medium itself due to the fact that the longitudinal component of the vector magnetic field is absent in the vicinity of the gap.

Next, the embodiments and comparison examples will be detailed.

Example 1

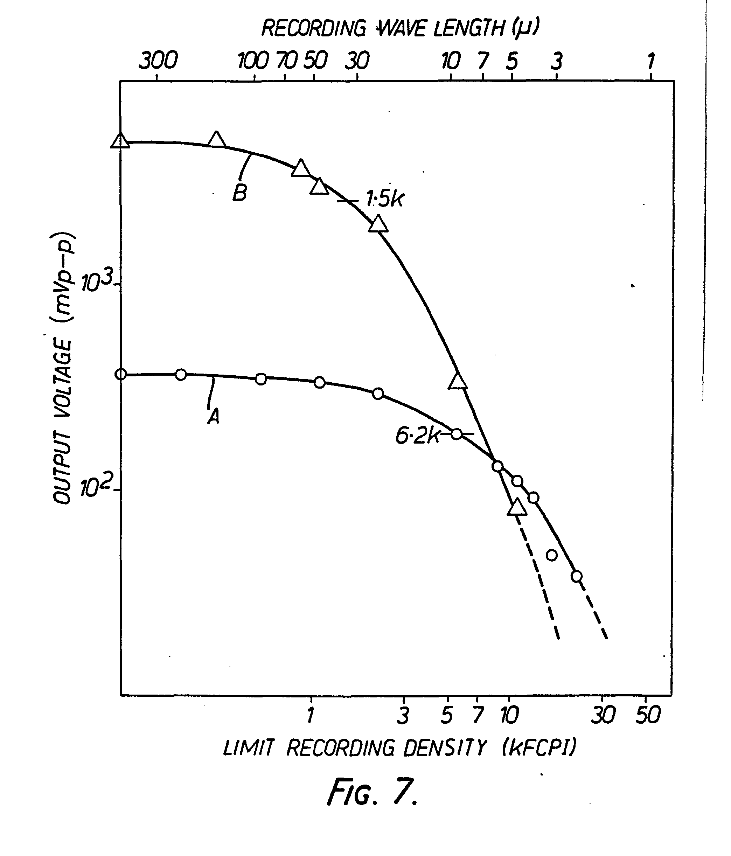

A ring-shaped magnetic core having a gap of 1.5 $\mu$ in length, track of 1.5mm in width, and magnetic path of average 25 mm in length, and having windings each of 500 turns on both arms, is used to form a head for trial. A magnetic tape is formed which comprises a strip of an organic film which is about 10 $\mu$ in thickness and coated with particulate iron oxide of 0.4 $\mu$ in average particle size. The test tape is coated in about 4 u thickness and has a coercive force of 5600e. The windings of test head are connected inversely in parallel as shown in Fig. 9, to record on the test tape a 500Hz square wave. Thereafter the coil connection is changed into normal series connection (corresponding to the use of conventiona ring-shaped head) to observe the reproduced wave form. The reproduced wave form is shown in Fig. 6, from which the magnetization perpendicular of the medium by the test head is seen (refer to "Recording Characteristics of Single Pole Type Magnetic Head" by Shunichi Iwasaki, Yoshihisa Nakamura and Isao Watanabe, in Japanese Electronic Communications Academy, Magnetic Recording Research Society Data No. MR 76-16, 1976).

Example 2

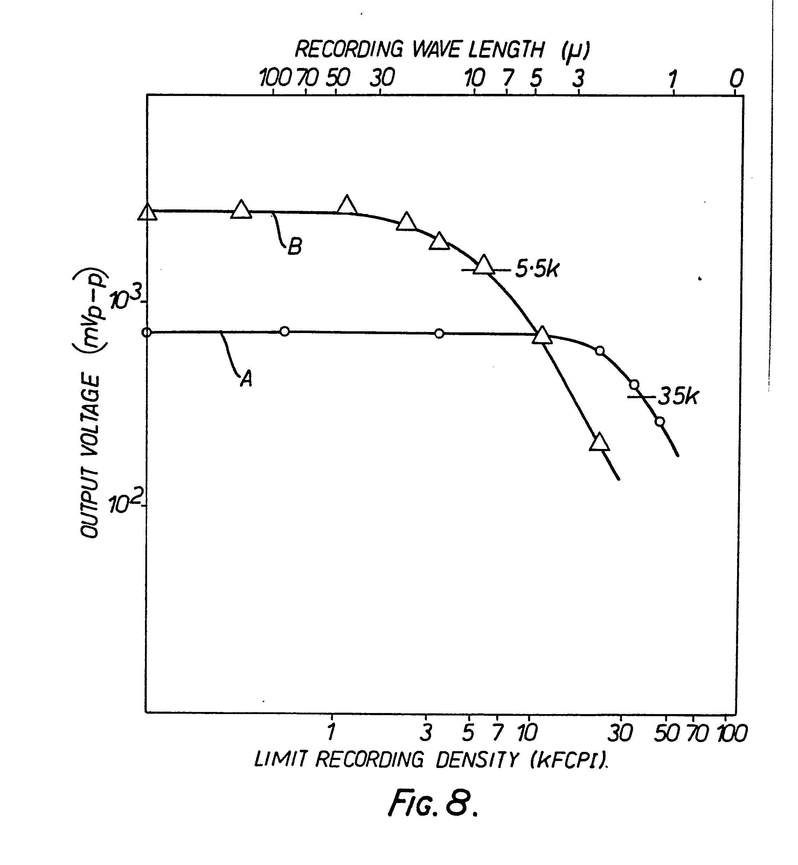

A combination of the head in Embodiment 1 and a medium; is used to measure the magnetic density characteristic (see the curve A in Fig. 7). In Fig. 7, the ordinate axis represents output voltage through an amplifier of a 60 dB gain.

The limit recording density determined at the point where the output voltage decreases by 6 dB of the output at the low density side, is $D_{50} = 6.2$ kFCPI.

## Comparative Example 1

The test head in Example 2 has windings connected normally in series and measures the recording density characerics in the same way as Example 2 with respect to a medium coated in longitudinal orientation with an accicular shaped $\gamma$ -$Fe_{203}$ magnetic powder commercial available (see the curve B in Fig. 7).

In this instance the limit recording density was $D_{50} = 1.5$ kFCPI.

## Example 3

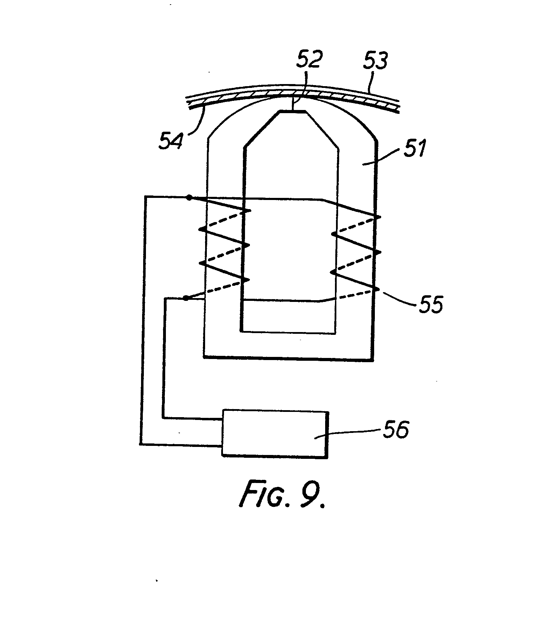

The test head the same as Example 1 except for a gap length of 0.8 u, was used to measure the limit recording density similarly to Example 2 with respect to a medium the same as Example 1. The result was $D_{50} = 35$ kFCPI (see the curve A in Fig. 8)

## Comparative Example 2

The windings of test head in Example 3 were connected normally in series so as to measure the limit recording density characteristics similarly to Example 2 with respect to the medium used in Comparative Example 1. The result was $D_{50} = 5.5$ kFCPI (see the curve B in Fig. 8).

## Example 4

The windings of test head in Example 1 were connected inversely in series and the test tape in the same was used to record a 500Hz square wave, and thereafter, the windings were changed to be connected normally in series to observe the reproduced wave form, resulting in that the same wave form as in Fig. 6 was gained. In other words, it has been seen that this example essentially has the same effect in the inversely series connection as the inversely parallel connection.

## Example 5

The test head in Example 1 was used to record a 500Hz square wave on commercially available cobalt evaporated tape and the reproduced wave form was observed by the same method as Example 1. As a result, the same wave form as in Fig. 6 has been obtained.

As seen from the above embodiments and comparative examples, the head apparatus of the invention can carry out vertical recording on a medium by a simple way using basically a conventional ring head. Also, since the vector magnetic field generated by the head is rich in components perpendicular to the medium, there is no need to require intense perpendicular anisotropy in the medium itself. In other words high density recording using perpendicular magnetization can be achieved using not only a perpendicular-magnetizing medium such as Co-Cr continuous film but also a convnetional coated medium with high reliability.

Alternatively, the recording system of the invention may of course be applicable to all media, such as a magnetic film produced by sputtering, plated magnetic film, magnetic film produced by CVD, or a resin molded body.

The magnetic head of the invention is suitable for the so-called multi-recording which has the easy-magnetization direction perpendicular and longitundal, for example, a medium in two layers, and records on the same medium, various different information.

CLAIMS:

1.      A perpendicular magnetic recording and reproducing head apparatus characterized in that said apparatus is provided with a magnetic core (41) having a gap (43) in the magnetic path in part, at least a pair of coils (421, 422) wound on said magnetic core (41), and a connecting means (44) capable of changing said coils into a connecting condition for generating homopolar magnetic charges in a pair of magnetic poles opposite each other through said gap and into that of generating heteropolar magnetic charges in the same magnetic poles, with respect to a common signal current flowing simultaneously in said coils.

2.      Apparatus according to claim 1, characterised in that the connecting means (44) is arranged to connect said coil inversely in parallel to each other during recording.

3.      Apparatus according to claim 1, characterised in that the connecting means (44) is arranged to connect said coils inversely in series with each other during recording.

4.      A magnetic recording system which uses a magnetic head having a gap in a magnetic path in member so as to magnetize a medium moving in proximity to said gap, characterised in that a pair of magnetic poles opposite to each other through a gap (43) generate homopolar magnetic charges so that a signal magnetic field is generated in said gap to magnetize said medium (11), said signal magnetic field performing magnetization thicknesswise of said medium, that is, mainly of vertical component.

5.      A magnetic recording system according to claim 4, characterised in that said medium (11) is composed of one or more magnetic layers (12) comprising magnetic particles mixed in a binding material, said magnetic layers being coated onto a substrate.

6.     A magnetic recording system according to claim 4, characterised in that said medium (11) comprises a magnetic layer (12) formed on a substrate by means of vapor coating.

7.     A magnetic recording system according to claim 4, characterised in that said medium (11) comprises a magnetic layer (12) formed on said substrate by means of depositing.

8.     A magnetic recording system according to claim 4, characterised in that said medium (11) comprises a magnetic layer (12) formed on said substrate by means of transfer.

FIG. 1.

PERPENDICULAR MAGNETIC FIELD

LONGITUDINAL MAGNETIC FIELD

FIG. 2.

PERPENDICULAR MAGNETIC FIELD

LONGITUDINAL MAGNETIC FIELD

FIG. 3.

FIG.4.

RECORDING SIGNAL

FIG. 5.

FIG. 6.

FIG. 7.

Fig. 8.

FIG. 9.

## EUROPEAN SEARCH REPORT

**European Patent Office**

Application number

EP 81 30 5808.8

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| A | Patent Abstracts of Japan Vol. 3, No. 56, 15 May 1979 page 14E110 & JP - A - 54 - 34219 -- | 1,4 | G 11 B 5/02 G 11 B 5/12 G 11 B 5/20 G 11 B 5/70 |
| A | DE - B - 2 034 164 (FUJI PHOTO FILM CO.) * claim 1; column 1, lines 28 to 56; fig. 2, 3A * & GB - A - 1 323 093 -- | 2 | |
| A | DE - B - 1 177 206 (TELEFUNKEN) * column 3, line 19 to column 4, line 16; fig. 1 * -- | 3 | TECHNICAL FIELDS SEARCHED (Int.Cl. ³) G 11 B 5/00 |
| Y | GB - A - 2 006 509 (SHUNICHI IWASAKI et al.) * claims 1 to 3; page 3, lines 20 to 55 * -- | 5-7 | |
| Y | US - A - 4 172 171 (FUJI PHOTO FILM CO.) * column 3, lines 3 to 15 * -- | 5-7 | |
| A | IBM TECHNICAL DISCLOSURE BULLETIN Vol. 20, No. 8, January 1978 New York A.S. HOAGLAND "Combined Longitudinal and Vertical Magnetic Recording Head" pages 3311 to 3312 ---- | | |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
|---|---|---|
| Berlin | 04-03-1982 | LEITHÄUSER |

EPO Form 1503.1   06.78